# EUROPÄISCHE PATENTANMELDUNG

(11) **EP 2 604 824 A1**
(43) Veröffentlichungstag der Anmeldung: **19.06.2013**
(21) Anmeldenummer: 12002262.9
(22) Anmeldetag: 29.03.2012
(51) Int. Cl.: F02C 6/14, F01K 25/00, F17C 9/04, F02C 3/20

(54) **Verfahren und Vorrichtung zur Erzeugung elektrischer Energie**

(30) Priorität: 13.12.2011 DE 102011121011
(71) Anmelder: Linde Aktiengesellschaft, 80331 Munich (DE)
(72) Erfinder: Alekseev, Alexander, Dr., 82515 Wolfratshausen (DE)
(74) Vertreter: Imhof, Dietmar

(57) **Zusammenfassung**

Das Verfahren und die Vorrichtung dienen zur Erzeugung elektrischer Energie. Ein Speicherfluid wird als tiefkalte Flüssigkeit (3) in einem Flüssigtank (4) gespeichert. Tiefkalte Flüssigkeit (5) wird aus dem Flüssigtank (4) entnommen und unter überatmosphärischem Druck verdampft oder pseudo-verdampft (8). Aus dem dabei erzeugten gasförmigen Hochdruck-Speicherfluid (10, 11) wird mechanische Energie erzeugt, wobei mindestens ein Teil der erzeugten mechanischen Energie in elektrische Energie umgewandelt wird. Mindestens ein Teil der Erzeugung mechanischer Energie aus dem gasförmigen Hochdruck-Speicherfluid (10, 11) wird in dem Gasturbinen-Expander eines Gasturbinen-Systems eines Gasturbinen-Kraftwerks (12) durchgeführt wird, wobei das Speicherfluid (10, 11) stromabwärts des (Pseudo-)Verdampfens (8) dem Gasturbinen-System (101, 102, 103) zugeleitet wird.

## Beschreibung

Die Erfindung betrifft ein Verfahren und Vorrichtung zur Erzeugung von elektrischer Energie gemäß dem Oberbegriff des Patentanspruchs 1 sowie eine entsprechende Vorrichtung.

Unter einer "tiefkalten Flüssigkeit" wird eine Flüssigkeit verstanden, deren Siedepunkt unterhalb der Umgebungstemperatur liegt und beispielsweise bei 200 K oder niedriger, insbesondere niedriger als 220 K liegt.

Die tiefkalte Flüssigkeit kann beim "Verdampfen" unter unterkritischem Druck stehen. Falls die tiefkalte Flüssigkeit aber auf einen überatmosphärischen Druck gebracht wird, der oberhalb des kritischen Drucks liegt, findet kein echter Phasenübergang ("Verdampfen"), sondern eine so genannte "Pseudo-Verdampfung" statt.

Es sind Verfahren und Vorrichtungen bekannt, die Flüssigluft oder Flüssigstickstoff zur Netzregelung und Bereitstellung von Regelleistung in Stromnetzen verwenden. Zu Billigstromzeiten wird dabei die Umgebungsluft in einer Luftzerlegungsanlage mit integriertem Verflüssiger oder in einer separaten Verflüssigungsanlage verflüssigt und in einem als Tieftemperaturspeicher ausgebildeten Flüssigtank gespeichert. Zu Spitzenlastzeiten wird die verflüssigte Luft aus dem Speicher entnommen, in einer Pumpe auf den höheren Druck gebracht, danach bis auf etwa Umgebungstemperatur oder höher angewärmt. Diese warme Hochdruckluft wird danach in einer Entspannungseinheit bestehend aus einer oder mehreren Turbinen mit Zwischenerwärmungen bis auf Umgebungsdruck entspannt. Die in der Turbineneinheit erzeugte mechanische Energie wird in einem Generator in elektrische Energie umgewandelt und als besonders wertvolle Energie ins elektrische Netz eingespeist. Ein derartiges System ist in WO 2007096656 beschrieben.

Solche Verfahren können, wie auch das Verfahren der Erfindung, grundsätzlich auch mit einem Speicherfluid durchgeführt werden, das 40 mol-% oder mehr Sauerstoff enthalten. Letzteres wurde hier jedoch ausgenommen, um eine Verwechslung mit Systemen zu vermeiden, bei denen ein besonders sauerstoffreiches Fluid zur Unterstützung von Oxidationsreaktionen in das Gasturbinen-System eingeleitet wird.

Der Erfindung liegt die Aufgabe zugrunde, ein derartiges System hinsichtlich seiner Wirtschaftlichkeit zu verbessern und insbesondere den apparativen Aufwand zu verringern.

Diese Aufgabe wird durch die kennzeichnenden Merkmale des Patentanspruchs 1 gelöst. Gemäß der Erfindung wird also mindestens ein Teil der Erzeugung mechanischer Energie aus dem gasförmigen Hochdruck-Speicherfluid in dem Gasturbinen-System des Kraftwerks vorgenommen, also in einem im Kraftwerk ohnehin vorhandenen Apparat zur Umsetzung von Druckenergie in mechanische Antriebsenergie. Ein zusätzliches separates System zur arbeitsleistenden Entspannung des Hochdruck-Speicherfluids kann im Rahmen der Erfindung weniger aufwändig ausgebildet sein oder ganz entfallen.

Ein "Gasturbinen-System" weist eine Gasturbine (Gasturbinen-Expander), einen von der Gasturbine angetriebenen Gasturbinen-Verdichter und eine Brennkammer auf. In der Gasturbine werden heiße Gase aus der Brennkammer arbeitsleistend entspannt. Ein Teil der dabei erzeugten mechanischen Energie wird zum Antrieb des Gasturbinen-Verdichters eingesetzt. Ein weiterer Teil wird regelmäßig zur Erzeugung elektrischer Energie in einem Generator umgesetzt.

Im Rahmen der Erfindung wird mechanische Energie aus dem Hochdruck-Speicherfluid erzeugt, indem entweder das Speicherfluid selbst oder ein aus ihm abgeleitetes Fluid im Gasturbinen-Expander entspannt wird. Das abgeleitete Fluid kann beispielsweise durch ein Gemisch des Speicherfluids mit einem oder mehreren anderen Fluiden gebildet werden, oder durch ein Reaktionsprodukt des Speicherfluids mit einem oder mehreren anderen Stoffen. Letzteres kann beispielsweise durch Verbrennungsabgas gebildet werden, wenn das Speicherfluid Sauerstoff enthält und zur Verbrennung eines Brennstoffs genutzt wird.

Die tiefkalte Flüssigkeit wird vorzugsweise in einer Luftbehandlungsanlage erzeugt, die entweder als Tieftemperatur-Luftzerlegungsanlage oder als Luftverflüssigungsanlage ausgebildet ist.

Eine "Tieftemperatur-Luftzerlegungsanlage" wird mit atmosphärischer Luft beschickt und weist ein Destillationssäulen-System zur Zerlegung atmosphärischer Luft in ihre physikalischen Komponenten auf, insbesondere in Stickstoff und Sauerstoff. Hierzu wird die Einsatzluft zunächst in die Nähe ihres Taupunkts abgekühlt und dann in das Destillationssäulen-System eingeleitet.

Verfahren und Vorrichtungen zur Tieftemperaturzerlegung von Luft sind zum Beispiel aus Hausen/Linde, Tieftemperaturtechnik, 2. Auflage 1985, Kapitel 4 (Seiten 281 bis 337) bekannt.

Das Destillationssäulen-System der Erfindung kann als Ein-Säulen-System zur Stickstoff-Sauerstoff-Trennung ausgebildet sein, als Zwei-Säulen-System (zum Beispiel als klassisches Linde-Doppelsäulensystem), oder auch als Drei- oder Mehr-Säulen-System. Es kann zusätzlich zu den Kolonnen zur Stickstoff-Sauerstoff-Trennung weitere Vorrichtungen zur Gewinnung hochreiner Produkte und/oder anderer Luftkomponenten, insbesondere von Edelgasen aufweisen, beispielsweise eine Argongewinnung und/oder eine Krypton-Xenon-Gewinnung.

Eine "Luftverflüssigungsanlage" enthält keinen Destillationssäulen-Teil. Im Übrigen entspricht ihr Aufbau dem einer Tieftemperatur-Luftzerlegungsanlage mit der Abgabe eines Flüssigprodukts. Selbstverständlich kann auch in einer Tieftemperatur-Luftzerlegungsanlage Flüssigluft als Nebenprodukt erzeugt werden.

Die tiefkalte Flüssigkeit durch wird verflüssigte Luft, Flüssigstickstoff oder Flüssigsauerstoff gebildet. Bevorzugt werden Flüssigstickstoff und/oder Flüssigluft eingesetzt oder allgemein ein Fluid, das weniger Sauerstoff als die atmosphärische Luft enthält. Auch eine Kombination zweier oder mehrerer Speicherfluide gleicher oder unterschiedlicher Zusammensetzung aus der gleichen Luftbehandlungsanlage oder aus einer Mehrzahl von Luftbehandlungsanlagen kann im Rahmen der Erfindung eingesetzt werden.

Unter "Stickstoff" wird hier sowohl reiner oder im Wesentlichen reiner Stickstoff verstanden als auch ein Gemisch aus Luftgasen, dessen Stickstoffgehalt höher als derjenige der atmosphärischen Luft ist. Zum Beispiel weist der Flüssigstickstoff einen Stickstoffgehalt von mindestens 90 %, vorzugsweise mindestens 99 %. (Alle Prozentangaben beziehen sich hier und im Folgenden auf die molare Menge, soweit nichts anderes angegeben ist.)

Unter "Sauerstoff" wird hier sowohl reiner oder im Wesentlich reiner Sauerstoff verstanden als auch ein Gemisch aus Luftgasen, dessen Sauerstoffgehalt höher als derjenige der atmosphärischen Luft ist. Zum Beispiel weist der Flüssigsauerstoff einen Sauerstoffgehalt von mindestens 30 %, vorzugsweise mindestens 50 %, insbesondere mindestens 80 %, insbesondere mindestens 95 %, insbesondere mindestens 99 %.

Im Rahmen der Erfindung ist es möglich, das gasförmige Speicherfluid in den Gasturbinen-Expander einzuspeisen, zum Beispiel in eine Luftleitung für die Schaufelkühlung oder in die Leitung zwischen Brennkammer und Gasturbine. In vielen Fällen ist es aber günstiger, wenn das gasförmige Speicherfluid dem Gasturbinen-System stromeinwärts der Brennkammer zugeführt wird, insbesondere indem das gasförmige Speicherfluid mit Verbrennungsluft aus dem Gasturbinen-Verdichter oder mit Brennstoff für die Brennkammer vermischt wird.

Selbstverständlich können die beiden genannten Varianten auch kombiniert werden, indem zum Beispiel ein erstes Hochdruck-Speicherfluid der Verbrennungsluft und ein zweites Hochdruck-Speicherfluid dem Brennstoff zugemischt wird. Das erste und das zweite Hochdruck-Speicherfluid können dabei die gleiche oder verschiedene Zusammensetzung aufweisen.

Alternativ oder zusätzlich kann das gasförmige Speicherfluid oder ein Teil davon dem Gasturbinen-System stromabwärts der Brennkammer zugeführt werden, beispielsweise, indem es direkt in den Gasturbinen-Expander eingeleitet wird. Hierbei kann es zur Schaufelkühlung genutzt werden - zusätzlich oder alternativ zu Luft aus dem Gasturbinen-Verdichter.

Im einfachsten Fall kann bei der Erfindung die gesamte Erzeugung von mechanischer Energie aus dem gasförmigen Hochdruck-Speicherfluid in dem Gasturbinen-System vorgenommen werden. Das Hochdruck-Speicherfluid wird dann unter dem Druck, unter dem es (pseudo-)verdampft wird, dem Gasturbinen-System zugeleitet. Es kann aber vorteilhaft sein, zusätzlich ein Heißgasturbinen-System vorzusehen. Dann wird die Erzeugung mechanischer Energie aus dem gasförmigen Hochdruck-Speicherfluid in zwei Schritten vorgenommen, wobei der erste Schritt als arbeitsleistende Entspannung in einem Heißgasturbinen-System durchgeführt wird, das mindestens einen Erhitzer und eine Heißgasturbine aufweist, und der zweite Schritt durch das Gasturbinen-System gebildet wird, wobei das gasförmige Hochdruck-Speicherfluid dem Heißgasturbinen-System zugeleitet und dort auf einen Zwischendruck entspannt wird und dem Heißgasturbinen-System ein gasförmiges Zwischendruck-Speicherfluid entnommen, das schließlich dem Gasturbinen-System zugeleitet wird.

Das "Heißgasturbinen-System" kann einstufig mit einem Erhitzer und einer einstufigen Turbine ausgebildet sein. Alternativ kann es mehrere Turbinen-Stufen, vorzugsweise mit Zwischenerhitzung, aufweisen. In jedem Fall ist es sinnvoll, hinter der letzen Stufe des Heißgasturbinen-Systems einen weiteren Erhitzer vorzusehen. Das Heißgasturbinen-System ist vorzugsweise mit einem oder mehreren Generatoren zur Erzeugung elektrischer Energie gekoppelt.

Unter "Erhitzer" wird hier ein System zum indirekten Wärmeaustausch zwischen einem Heizfluid und dem gasförmigen Speicherfluid verstanden. Hiermit kann Restwärme oder Abwärme auf das Speicherfluid übertragen und zur Energieerzeugung im Heißgasturbinen-System genutzt werden.

Die Erfindung betrifft außerdem eine Vorrichtung zur Erzeugung von Energie gemäß Patentanspruch 7. Die erfindungsgemäße Vorrichtung kann durch Vorrichtungsmerkmale ergänzt werden, die den Merkmalen der abhängigen Verfahrensansprüche entsprechen.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: das Grundprinzip der Erfindung in einer ersten Variante,
- Figuren 2 bis 4: verschiedenen Ausführungsformen der Zuspeisung in das Gasturbinen-System und
- Figur 5: das Grundprinzip der Erfindung in einer zweiten Variante mit Heißgasturbinen-System.

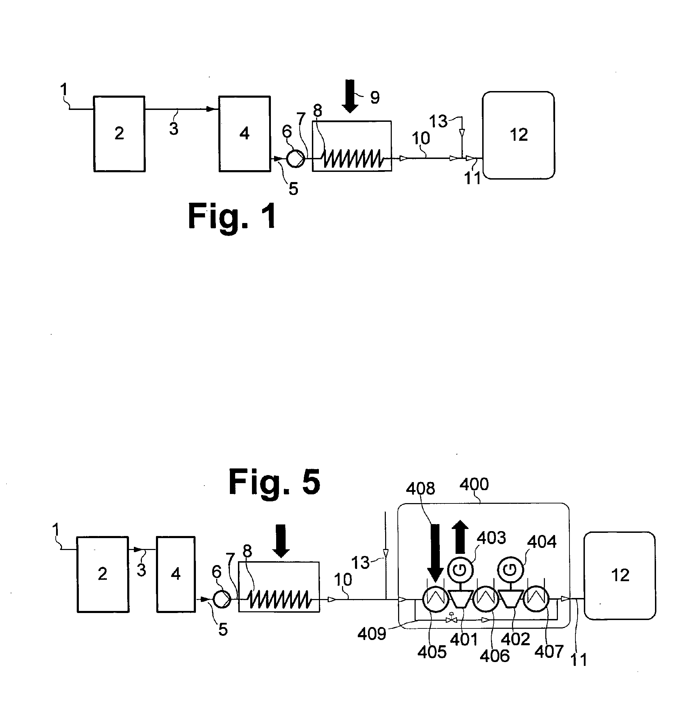

In Figur 1 wird aus atmosphärischer Luft 1 in einer Luftbehandlungsanlage 2 Flüssigluft erzeugt. Die Luftbehandlungsanlage 2 ist hier als Luftverflüssigungsanlage ausgebildet. Die Flüssigluft steht in dem Ausführungsbeispiel unter etwa atmosphärischem Druck und wird als "tiefkalte Flüssigkeit" 3 in einen Flüssigtank 4 eingeleitet, der als Tieftemperaturspeicher ausgebildet ist. (Alternativ kann die tiefkalte Flüssigkeit unter einem höheren Druck erzeugt beziehungsweise gespeichert werden, beispielsweise bei 6 bis 16 bar, oder auch bei höherem Druck, falls das die Behälterbauweise erlaubt.) In Spitzenlastzeiten wird dem Flüssigtank 4 tiefkalte Flüssigkeit 5 entnommen und in einer Pumpe 6 auf einen überatmosphärischen Druck von beispielsweise 20 bis 30 bar gebracht. Das tiefkalte Hochdruckfluid 7 wird in einem Verdampferdampfer-System 8 in Wärmeaustausch mit einer Wärmequelle 9 verdampft, um ein gasförmiges Hochdruck-Speicherfluid 10 zu bilden, das in diesem konkreten Ausführungsbeispiel aus Hochdruckluft besteht.

Das Verdampfer-System kann aus einem oder mehreren Apparaten wie Wärmetauschern und Wärmespeichern bestehen. Die Wärmequelle kann aus dem Speichermedium eines Wärmespeichers bestehen, mit dem das Hochdruck-Speicherfluid in direkten Wärmeaustausch tritt. Alternativ wird sie durch ein Prozessfluid aus einem Apparat gebildet, der einen Kältebedarf aufweist, zum Beispiel aus einem Luft-, Stickstoff- oder Erdgas-Verflüssiger; in diesem Fall tritt das Hochdruck-Speicherfluid in indirekten Wärmeaustausch mit der Wärmequelle, nämlich dem Prozessfluid. Auch atmosphärische Luft oder Prozessdampf kann als Wärmequelle eingesetzt werden.

Selbstverständlich können verschiedene Wärmequellen für dasselbe Hochdruck-Speicherfluid verwendet werden.

Das gasförmige Hochdruck-Speicherfluid 10 wird über Leitung 11 einem Gasturbinen-Kraftwerk 12 zugeleitet, in dieser Ausführungsvariante unmittelbar von dem hohen Druck aus, der in der Pumpe 6 erzeugt wurde.

Vor der Einleitung in das Gasturbinen-Kraftwerk kann bei Bedarf ein weiteres Hochdruckgas 13 zugemischt werden, zum Beispiel Luft aus einem Druckluftspeicher. Grundsätzlich ist es auch möglich ein Hochdruckgas 13, das aus einem Druckgasspeicher kommt) alleine einzusetzen, ohne dass ein tiefkaltes flüssiges Speicherfluid verdampft oder pseudo-verdampft wird.

In einer abweichenden Ausführungsform wird die Luftbehandlungsanlage 2 durch eine Tieftemperatur-Luftzerlegungsanlage gebildet, die Flüssigstickstoff als tiefkalte Flüssigkeit 3 produziert. Das gasförmige Hochdruck-Speicherfluid 10 besteht in diesem Fall aus gasförmigem Hochdruck-Stickstoff (HD-GAN).

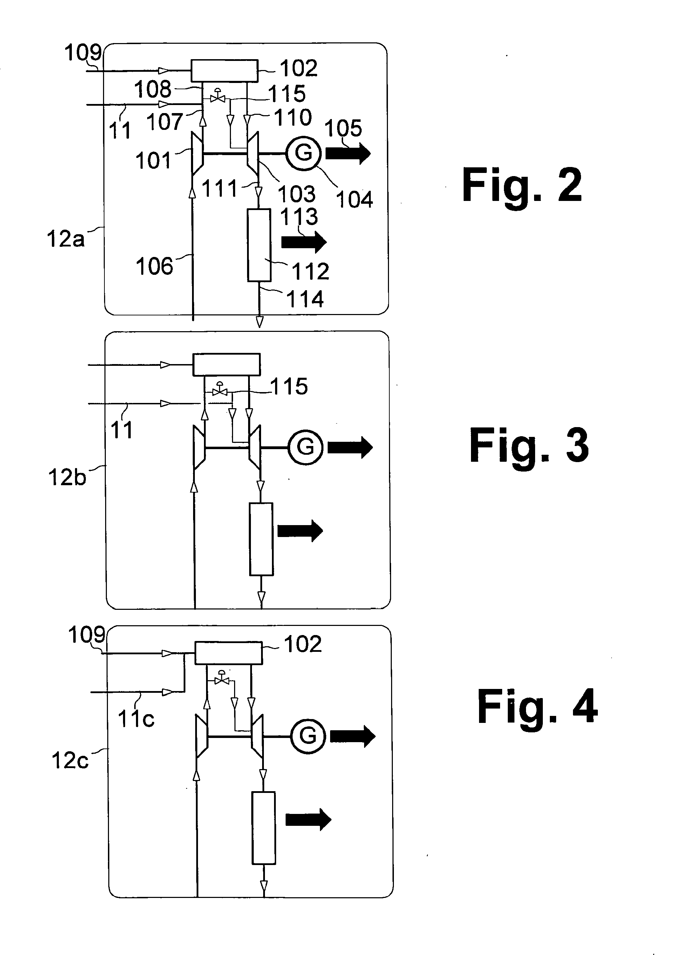

Figur 2 zeigt eine erste Ausführungsform 12a des Gasturbinen-Kraftwerks 12 der Figur 1 im Detail. Das Kraftwerk weist ein Gasturbinen-System aus Gasturbinen-Verdichter 101, Brennkammer 102 und Gasturbinen-Expander (im Folgenden auch Gasturbine genannt) 103 auf. Der Verdichter 101 und die Gasturbine 103 sind sowohl untereinander mechanisch gekoppelt als auch mit einem Generator 104 zur Erzeugung elektrischer Energie 105.

In dem üblichen Gasturbinen-Prozess wird atmosphärische Luft 106 in dem Gasturbinen-Verdichter 101 auf den Brennkammerdruck von beispielsweise 15 bar verdichtet und über die Leitungen 107 und 108 der Brennkammer 102 zugeführt. Dort dient sie als Oxidationsmittel für die Verbrennung eines Brennstoffs 109, der aus Erdgas, Synthesegas aus einer Vergasung oder aus jedem anderen geeigneten Stoff, insbesondere aus einem flüssigen oder gasförmigen Kohlenwasserstoffgemisch besteht.

Das heiße Verbrennungsabgas 110 wird im Gasturbinen-Expander 103 arbeitsleistend auf etwa Umgebungsdruck entspannt. Das entspannte Verbrennungsabgas 111 wird gegebenenfalls einem Dampferzeugungssystem 112 zur Rückgewinnung von Abwärme zugeleitet, das wiederum elektrische Energie oder mechanische Antriebsenergie 113 erzeugt. Anschließend wird es - nach entsprechender Reinigung - über Leitung 114 in die Atmosphäre abgeblasen.

Ein Teil der im Verdichter verdichteten Luft wird bei modernen Gasturbinen zur Kühlung der Schaufeln des Gasturbinen-Expanders verwendet, da diese durch unmittelbaren Kontakt mit bis zu 1400°C heißem Gas aus der Brennkammer thermischen Beanspruchungen ausgesetzt sind. Diese Teilluftmenge (Kühlluft) wird dann nicht über die Brennkammer geführt, sondern am Austritt aus dem Verdichterteil entnommen und durch Kanäle innerhalb von Schaufeln geführt. Die Kühlluft strömt durch die Öffnungen an der vorderen Schaufelkante und anderen Stellen aus. Dadurch bildet sich an der Oberfläche der Turbinenschaufeln eine Kaltluftschutzschicht. Diese Luftmenge nimmt am arbeitsleistenden Entspannungsprozess nicht unmittelbar teil, dennoch wird aus ihr mechanische Energie gewonnen. Die oben genannten Kanäle, die direkt vom Verdichteraustritt in den Gasturbinen-Expander führen, sind in Figur 1 als Bypass-Leitung 115 dargestellt. Über diese Bypass-Leitung 115 kann ein Teil der Hochdruckluft 107 zur Schaufelkühlung direkt in den Gasturbinen-Expander eingeleitet werden.

Erfindungsgemäß wird die Hochdruckluft 11 stromabwärts des Verdampfers 8 (gegebenenfalls vermischt mit einem weiteren Strom 10 - siehe Figur 1) dem Gasturbinen-System (101, 102, 103) zugeleitet. Sie wird hier in die Leitung zwischen Gasturbinen-Verdichter 101 und Gasturbinen-Brennkammer 102 eingeführt. Mindestens ein Teil dieser zugespeisten Hochdruckluft nimmt an der Verbrennung in der Brennkammer teil und strömt anschließend als Verbrennungsabgas zum Gasturbinen-Expander 103. Dort wird mechanische Energie aus dem gasförmigen Hochdruck-Speicherfluid (10, 11) erzeugt, in dem dieser Hochdruck-Speicherfluid beziehungsweise aus ihm gewonnenes Verbrennungsabgas arbeitsleistend entspannt wird.

In dem abgewandelten Gasturbinen-Kraftwerk 12b der Figur 3 wird die Hochdruckluft 11 direkt in die Bypassleitung 115 und damit unmittelbar in den Gasturbinen-Expander eingespeist.

Wird Stickstoff als HFS eingesetzt, kann dieser grundsätzlich wie die Luft in den Figuren 2 und 3 in das Gasturbinen-System eingebracht werden. Es kann aber auch günstig sein, mindestens einen Teil 11 c des gasförmigen Hochdruckstickstoffs mit dem Brennstoff stromaufwärts der Brennkammer 102 zu vermischen, wie es in Figur 4 dargestellt ist, die ein abgewandeltes Gasturbinen-Kraftwerk 12c dargestellt.

Figur 5 entspricht weitgehend Figur 1. Allerdings ist hier stromaufwärts der Einleitung 11 in das Gasturbinen-Kraftwerk 12 ein Heißgasturbinen-System 400 angeordnet. In diesem Fall wird die tiefkalte Flüssigkeit 5 in der Pumpe 6 auf einen höheren Druck von beispielsweise 60 bis 100 bar gebracht und bei diesem überkritischen Druck im Verdampfer-System 8 pseudo-verdampft. Von diesem Druck aus wird das gasförmige Hochdruck-Speicherfluid 10 (gegebenenfalls vermischt mit einem weiteren Hochdruckgas 13) in einem ersten Schritt arbeitsleistend entspannt, und zwar auf einem Zwischendruck von beispielsweise 20 bar, wobei mechanische Energie erzeugt wird. Unter diesem Zwischendruck wird das Speicherfluid 11 dann an das Gasturbinen-System weitergeleitet, wobei jede der Varianten der Figuren 2 bis 4 zum Einsatz kommen kann.

Das Heißgasturbinen-System 400 besteht in dem Beispiel der Figur 4 aus zwei Turbinenstufen 401, 402, die jeweils an einen Generator 403, 404 gekoppelt sind. Jeder Turbinenstufe ist ein Erhitzer 405, 406 vorgeschaltet, in dem das Speicherfluid durch indirekten Wärmeaustausch mit einem oder mehreren Heizfluiden 407 erhitzt wird. Ein weiterer Erhitzer 408 ist der letzten Heißgasturbinen-Stufe nachgeschaltet.

Bei Bedarf kann das Speicherfluid oder ein Teil davon über einen Bypass 409 an den Heißgasturbinen und den Erhitzern vorbeigeleitet werden.

## Patentansprüche

1. Verfahren zur Erzeugung elektrischer Energie, bei dem ein Speicherfluid, das weniger als 40 mol-% Sauerstoff enthält, als tiefkalte Flüssigkeit (3) in einem Flüssigtank (4) gespeichert wird, tiefkalte Flüssigkeit (5) aus dem Flüssigtank (4) entnommen und unter überatmosphärischem Druck verdampft oder pseudo-verdampft (8) wird, und aus dem dabei erzeugten gasförmigen Hochdruck-Speicherfluid (10, 11) mechanische Energie erzeugt wird, wobei mindestens ein Teil der erzeugten mechanischen Energie in elektrische Energie (105) umgewandelt wird, **dadurch gekennzeichnet, dass** mindestens ein Teil der Erzeugung mechanischer Energie aus dem gasförmigen Hochdruck-Speicherfluid (10, 11) in dem Gasturbinen-Expander (103) eines Gasturbinen-Systems (101, 102, 103) eines Gasturbinen-Kraftwerks (12, 12a, 12b, 12c) durchgeführt wird, wobei das Speicherfluid (10, 11) stromabwärts des (Pseudo-)Verdampfens (8) dem Gasturbinen-System (101, 102, 103) zugeleitet wird.

2. Verfahren nach Anspruch 1, **dadurch gekennzeichnet, dass** die tiefkalte Flüssigkeit (3) in einer Luftbehandlungsanlage (2) erzeugt wird, die entweder als Tieftemperatur-Luftzerlegungsanlage oder als Luftverflüssigungsanlage ausgebildet ist.

3. Verfahren nach Anspruch 1 oder 2, **dadurch gekennzeichnet, dass** die tiefkalte Flüssigkeit (3) durch verflüssigte Luft, Flüssigstickstoff oder Flüssigsauerstoff gebildet wird.

4. Verfahren nach einem der Ansprüche 1 bis 3, **dadurch gekennzeichnet, dass** das gasförmige Speicherfluid (10, 11) dem Gasturbinen-System stromaufwärts der Brennkammer (102) zugeführt wird, indem das gasförmige Speicherfluid (11) mit Verbrennungsluft (107) aus dem Gasturbinen-Verdichter (101) oder mit Brennstoff (109) für die Brennkammer (102) vermischt wird.

5. Verfahren nach einem der Ansprüche 1 bis 4, **dadurch gekennzeichnet, dass** das gasförmige Speicherfluid (10, 11) dem Gasturbinen-System (103) stromabwärts der Brennkammer (102) zugeführt (115) wird.

6. Verfahren nach einem der Ansprüche 1 bis 5, **dadurch gekennzeichnet, dass** die Erzeugung mechanischer Energie aus dem gasförmigen Hochdruck-Speicherfluid in zwei Schritten vorgenommen wird, wobei der erste Schritt als arbeitsleistende Entspannung in einem Heißgasturbinen-System (400) durchgeführt wird, das mindestens einen Erhitzer (405, 406, 407) und eine Heißgasturbine (401, 402) aufweist, und der zweite Schritt durch das Gasturbinen-System (101, 102, 103) gebildet wird, wobei das gasförmige Hochdruck-Speicherfluid (10) dem Heißgasturbinen-System (400) zugeleitet und dort auf einen Zwischendruck entspannt wird, und dem Heißgasturbinen-System (400) ein gasförmiges Zwischendruck-Speicherfluid (11) entnommen, das schließlich dem Gasturbinen-System (101, 102. 103) zugeleitet wird.

7. Vorrichtung zur Erzeugung von Energie zur Erzeugung elektrischer Energie mit einem Flüssigtank (4) zum Speichern eines Speicherfluids (3) als tiefkalte Flüssigkeit, mit Mitteln zum Entnehmen tiefkalter Flüssigkeit (5) aus dem Flüssigtank (4), mit Mitteln (6, 7, 8) zum Verdampfen oder Pseudo-Verdampfen der tiefkalten Flüssigkeit (5) unter überatmosphärischem Druck verdampft oder pseudo-verdampft (8), mit Mitteln zum Erzeugen mechanischer Energie aus dem beim (Pseudo-)Verdampfen erzeugten gasförmigen Hochdruck-Speicherfluid (10, 11) und mit Mitteln zum Umwandeln mindestens eines Teils der erzeugten mechanischen Energie in elektrische Energie (105), **dadurch gekennzeichnet, dass** mindestens ein Teil die Mittel zum Erzeugen mechanischer Energie aus dem gasförmigen Hochdruck-Speicherfluid (10, 11) den Gasturbinen-Expander (103) eines Gasturbinen-Systems (101, 102, 103) eines Gasturbinen-Kraftwerks (12, 12a, 12b, 12c) umfassen und die Vorrichtung Mittel zum Zuleiten des Speicherfluids (10, 11) stromabwärts des (Pseudo-)Verdampfens (8) zu dem Gasturbinen-System (101, 102, 103) aufweist.
